# EUROPEAN PATENT SPECIFICATION

(11) **EP 2 876 869 B1**
(45) Date of publication and mention of the grant of the patent: **07.10.2020**
(21) Application number: 13819842.9
(22) Date of filing: 09.07.2013
(51) Int. Cl.: G06F 8/61, H04M 1/725

(54) **METHOD AND SYSTEM FOR INSTALLING APPLICATION**
VERFAHREN UND SYSTEM ZUR INSTALLATION VON ANWENDUNGEN
PROCÉDÉ ET SYSTÈME POUR L'INSTALLATION D'UNE APPLICATION

(30) Priority: 19.07.2012 CN 201210250877
(43) Date of publication of application: 27.05.2015
(73) Proprietor: Tencent Technology (Shenzhen) Co., Ltd, Guangdong 518000 (CN)
(72) Inventor: LI, Xiangru, Shenzhen City Guangdong 518000 (CN); LUO, Xuan, Shenzhen City Guangdong 518000 (CN)
(74) Representative: Klunker IP Patentanwälte PartG mbB
(86) International application number: PCT/CN2013/079089
(87) International publication number: WO 2014/012445

(56) References cited:
- EP-A1- 2 696 283
- WO-A1-2006/018030
- WO-A2-2009/120595
- CN-A- 101 860 591
- CN-A- 102 460 388
- CN-A- 102 752 457
- US-A1- 2006 048 141
- US-A1- 2012 079 095
- Anonymous: "How to Install Android Apps and Share Contacts Using QR Codes", , 9 August 2010 (2010-08-09), XP055250741, Retrieved from the Internet: URL:http://www.howtogeek.com/howto/24921/h ow-to-install-android-apps-and-share-conta cts-using-qr-codes/ [retrieved on 2016-02-17]

## Description

### CROSS-REFERENCE TO RELATED APPLICATIONS

The present application is the National Stage of, and therefore claims the benefit of, International Application No. PCT/CN2013/079089 filed on July 9, 2013, which claims the priority to Chinese Patent Application No. 201210250877.7, entitled "Method and System for Installing Application", filed with the State Intellectual Property Office of China on July 19, 2012.

### FIELD OF INVENTION

The present disclosure relates to the field of communications, and more specifically to a method and system for installing an application.

### BACKGROUND

With the rapid development of terminal technology, terminals have been taken increasingly wide advantage of by users, and the number of applications developed for terminals has also grown. Users often install an application on a terminal and run this application on the terminal. For example, with current extensive use of mobile phones by users, more and more applications have been developed for mobile phones. Users can install a variety of applications on a mobile phone.

In addition, it should be noted that: many users now have more than one terminal, and sometimes they may want to install an application, that has already been installed on one of their terminals, on other terminals also owned by them. For example, besides a mobile phone, many users now also have a computer, and they often install a same application on both the mobile phone and the computer.

At present, an application is installed manually by a user on a terminal. After manually installing an application on one of the user's terminals, the user also needs to repeatedly install this application manually on other terminals he/she has. Thus, the application installation according to the prior art is lacking in convenience.
In the patent US2012/079095A1, a logically centralized system or service, such as a cloud-based content management service, enables intelligent communication between disparate devices. Such communication enables content such as applications and data to be synchronized between various devices, where the synchronization takes into account the capabilities of each device to provide versions and/or formats of that content that are appropriate for each device. A user purchasing an additional device, for example, can have various applications and other content automatically installed or copied over to the additional device, but with versions or formats that take advantage of, and are appropriate for, the capabilities of that additional device. Further, the intelligent communication via a logically centralized service can enable such devices to interact even though those devices might utilize different protocols and/or formats, and might otherwise not be able to communicate or have ever have been tested together.

In the patent EP2696283A1. a method for synchronizing application programs across devices is provided. The method comprises the following steps: collecting and sending information of application programs installed in a first device to a server by a first client end; collecting and sending device information of a second device to the server by a second client end; sending download addresses of the application programs compatible with the second device to the second client end according to the device information received from the second client end and the information of the application programs received from the first client end by the server; downloading and installing the application programs in the second device according to the download addresses by the second client end. The present disclosure also provides a system for synchronizing the application programs across the devices. By this means, the method and system for synchronizing application programs across devices of the present disclosure are capable of conveniently and rapidly synchronizing the application programs among various devices to ensure that a user can rapidly and effectively install application programs, compatible with an up-to-date device, in an original device.

### SUMMARY OF THE INVENTION

In order to enhance convenience in installing an application, a method and system for installing an application is provided, which comprises the following technical solutions.

A method for installing an application comprises
acquiring application installation information by a first terminal, the application installation information comprises an application identifier of the application, each format of the application and a download address corresponding to each format;
sending a user account and the application installation information to an account server by the first terminal;
receiving the user account and the application installation information and storing the user account and the application installation information in correspondence between user accounts and application installation information, by the account server;
sending an acquisition request message to the account server by the second terminal, with the acquisition request message carrying the user account;
acquiring the application installation information from the stored user account and the stored application installation information, according to the user account, by the account server; and receiving an acquisition response message sent by the account server by the second terminal, with the acquisition response message carrying the application installation information acquired by the account server;
installing a corresponding application according to the application installation information on the second terminal.

A system for installing an application, comprising: a first terminal and a second terminal which comprises a first acquiring module and an installing module;
the first terminal, configured to acquire application installation information, the application installation information comprises an application identifier of the application, each format of the application and a download address corresponding to each format;
the first acquiring module, configured to acquire the application installation information from the first terminal; and
the installing module, configured to install a corresponding application according to the application installation information;
the system further comprises an account server, wherein the account server comprises:
a storage module, configured to receive the user account and the application installation information and store the user account and the application installation information in correspondence between user accounts and application installation information; and
the first terminal further comprises:
   a first sending module, configured to send a user account and the application installation information to the account server;
   the first acquiring module, configured to acquire the application installation information from the account server according to the user account;
   wherein the first acquiring module comprises:
      a first sending unit, configured to send an acquisition request message to the account server, with the acquisition request message carrying the user account; and
      a first receiving unit, configured to receive an acquisition response message sent by the account server, with the acquisition response message carrying the application installation information acquired by the account server;
      wherein the account server is further configured to acquire the application installation information from the stored user account and the stored application installation information, according to the user account.

According to the abovementioned technical solutions provided by the present disclosure, a desired application may be installed on one terminal based on another terminal via an account server, enhancing convenience in installing the application.

### BRIEF DESCRIPTION OF THE DRAWINGS

Fig. 1 illustrates a flow chart of a method for installing an application according to Embodiment 1 of the present disclosure;
Fig. 2 illustrates a flow chart of a method for installing an application according to Embodiment 2 of the present disclosure;
Fig. 3 illustrates a flow chart of a method for installing an application according to Embodiment 3 of the present disclosure;
Fig. 4 illustrates a flow chart of a method for installing an application according to Embodiment 4 of the present disclosure;
Fig. 5 illustrates a flow chart of a method for installing an application according to Embodiment 5 of the present disclosure;
Fig. 6 illustrates a structure diagram of a system for installing an application according to Embodiment 6 of the present disclosure;
Fig. 7 illustrates a flow chart of a method for transmitting application installation information according to Embodiment 7 of the present disclosure;
Fig. 8 illustrates a flow chart of a method for installing an application according to Embodiment 8 of the present disclosure; and
Fig. 9 illustrates a flow chart of a method for uploading application installation information according to Embodiment 9 of the present disclosure.

### DETAILED DESCRIPTION

In the following discussion, a detailed description of embodiments of the present disclosure will be provided by referring to the accompanying drawings, for the purpose of rendering a clearer presentation of the aim, technical solutions and advantages of the present disclosure.

Examples of applicable terminals according to various embodiments include, but not limited to, tablet computers (including, but not limited to, iPad of Apple Inc. and other touchscreen devices running the iOS of Apple Inc. thereon, Microsoft Surface, other touchscreen devices running the Windows operating system thereon and tablet devices running the Android operating system thereon), mobile phones, smart phones (including, but not limited to, iPhone of Apple Inc., Windows mobile phones, other smart phones running the Windows or Pocket PC operating system thereon, and smart phones running the Android operating system, the blackberry operating system or the Symbian operating system thereon), electronic readers (including, but not limited to, Amazon Kindle and Barnes & Noble Nook), portable computers (including, but not limited to, computers running the Apple Mac operating system, the Windows operating system, the Android operating system and/or the Google Chrome operating system), or on-board equipment running any of the abovementioned operating systems or any other operating system thereon, all of which are very familiar to a person skilled in the art.

### Embodiment 1

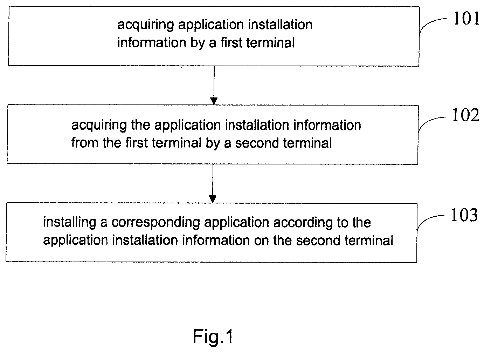

As shown in Fig. 1, the present disclosure provides a method for installing an application, which comprises the following steps.
Step 101: application installation information is acquired by a first terminal.
Step 102: the application installation information is acquired from the first terminal by a second terminal.
Step 103: according to the application installation information, a corresponding application is installed on the second terminal.

In some embodiments, the first terminal may be directly or indirectly connected with the second terminal via a communication connection; the first terminal and the second terminal may be connected to each other by establishing a communication connection in a WIFI (Wireless Fidelity) network, a 3G network or a local area network, or the first terminal and the second terminal may be connected to each other by establishing a communication connection via infrared or Bluetooth.

In this embodiment of the present disclosure, the first terminal acquires the application installation information of the application, and the second terminal acquires the application installation information and installs the corresponding application according to the acquired application installation information. Thus, the second terminal automatically acquires the application installation information of the application and installs the application accordingly, enhancing convenience in installing the application.

### Embodiment 2

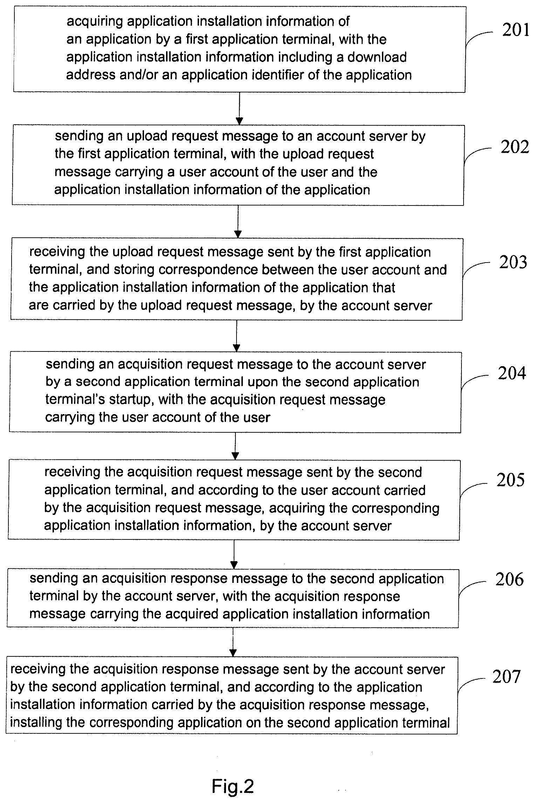

As shown in Fig.2, this embodiment of the present disclosure provides a method for installing an application, which comprises the following steps.

Step 201: application installation information of an application is acquired by a first application terminal, and the application installation information includes a download address and/or an application identifier of the application.

In some embodiments, if a user needs to install an application on the first application terminal, the user firstly downloads an installation package for the application, which contains the application installation information of the application, onto the first application terminal, and when the user installs the application on the first application terminal according to the installation package for the application, the first application terminal acquires the application installation information of the application.

In some embodiments, the application may be of one or more formats, wherein the application being of only one format may be installed on all types of terminals, such as a current webpage application which is of only one format and may be installed on any type of terminals; the application installation information contained in an installation package for the webpage application includes a download address and/or an application identifier of the webpage application; and accordingly, the application installation information of the webpage application acquired from the installation package of the webpage application by the first application terminal includes the download address and the application identifier of the webpage application.

In the case of an application being of more than one format, only the application in a format supported by a terminal may be installed on the terminal, and application installation information in an installation package for this application includes an application identifier, a download address and/or each format of the application as well as a download address corresponding to each format.

For example, it is assumed that the user needs to install a certain application on the first application terminal, wherein the application is MicroBlog, which includes two formats, the format for Android (APK Android Package) and the format for iOS, and the application installation information of MicroBlog includes an application identifier IDA, a APK format, a download address IPA corresponding to the APK format, an iOS format and a download address IPB corresponding to the iOS format; when the user installs MicroBlog on the first application terminal, the first application terminal acquires application installation information from an installation package of MicroBlog with the application installation information including the application identifier IDA, the APK format, the download address IPA corresponding to the APK format, the iOS format and the download address IPB corresponding to the iOS format.

Step 202: an upload request message is sent to an account server by the first application terminal, and carries a user account of the user and the application installation information of the application.

In some embodiments, the user inputs the user account into the first application terminal beforehand, and the first application terminal receives and stores the user account.

For example, the user inputs a user account UserID1 into the first application terminal beforehand, and the first application terminal receives and stores the user account UserIDl; accordingly, the first application terminal acquires the user account UserID1 stored thereon, and sends an upload request message that carries the user account UserID1 and the application installation information of MicroBlog, which includes the application identifier IDA, the APK format, the download address IPA corresponding to the APK format, the iOS format and the download address IPB corresponding to the iOS format.

Step 203: the upload request message sent by the first application terminal is received, and correspondence between the user account and the application installation information of the application that are carried by the upload request message are stored, by the account server.

For example, the account server receives the upload request message, which is sent by the I first application terminal and carries the user account UserID1 and the application installation information of MicroBlog including the application identifier IDA, the APK format, the download address IPA corresponding to the APK format, the iOS format and the download address IPB corresponding to the iOS format, and the account server stores correspondence between the user account UserID1 and the application installation information of MicroBlog in the correspondence between user accounts and application installation information as shown in Table 1.

**Table 1**

| User Account | Application Installation Information |
|---|---|
| UserID1 | IDA |
| | APK format, IPA |
| | iOS format, IPB |
| ...... | ...... |

Step 204: an acquisition request message is sent to the account server by a second application terminal upon the second application terminal's startup, with the acquisition request message carrying the user account of the user.

In some embodiments, the user inputs the user account onto the second application terminal beforehand and the second application terminal receives and stores the user account. Both the first application terminal and the second application terminal are owned by the user, and the user account stored on the first application terminal is the same as that stored on the second application terminal.

For example, the user account UserID1 is stored on the second application terminal beforehand, and upon startup, the second application terminal sends an acquisition request message to the account server, with the acquisition request message carrying the user account UserID1.

Step 205: the acquisition request message sent by the second application terminal is received, and according to the user account carried by the acquisition request message, the corresponding application installation information is acquired, by the account server.

Specifically, the account server receives the acquisition request message sent by the second application terminal, and according to the user account carried by the acquisition request message, acquires the corresponding application installation information from the stored correspondence between user accounts and application installation information.

For example, the account server receives the acquisition request message, which is sent by the second application terminal and carries the user account UserID1, and according to the user account UserID1 carried by the acquisition request message, the account server acquires the corresponding application installation information from the correspondence between user accounts and application installation information as shown in Table 1, wherein the acquired application installation information includes the application identifier IDA, the APK format, the download address IPA corresponding to the APK format, the iOS format and the download address IPB corresponding to the iOS format.

Step 206: an acquisition response message is sent to the second application terminal by the account server, with the acquisition response message carrying the acquired application installation information.

For example, the account server sends the acquisition response message to the second application terminal, wherein the acquisition response message carries the acquired application installation information including the application identifier IDA, the APK format, the download address IPA corresponding to the APK format, the iOS format and the download address IPB corresponding to the iOS format.

Step 207: the acquisition response message sent by the account server is received by the second application terminal, and according to the application installation information carried by the acquisition response message, the corresponding application is installed on the second application terminal.

Specifically, if the application installation information includes at least an application identifier and a download address, the second application terminal receives the acquisition response message, which is sent by the account server and carries the application installation information, and according to the application identifier included in the application installation information, the second application terminal determines whether the application corresponding to the application identifier has been installed on itself. If the application has not been installed and the application installation information includes a download address corresponding to the application, the second application terminal downloads an installation package for the application according to the download address, and then the application is installed on the second application terminal according to the installation package for the application; if the application has not been installed and the application installation information includes a plurality of formats of the application as well as a download address corresponding to each format, the second application terminal selects a download address corresponding to a format supported by itself and downloads an installation package for the application according to the selected download address, and then the application is installed on the second application terminal according to the installation package for the application.

Or, if the application installation information includes an application identifier of the application, the second application terminal receives an acquisition response message, which is sent by the account server and carries the application installation information, and sends a download request message to an application server, with the download request message carrying the application identifier and the terminal type of the second application terminal; the application server receives the download request message, acquires an installation package for the application according to the application identifier and the terminal type of the second application terminal that are carried by the download request message, and sends the installation package for the application to the second application terminal; the second application terminal receives the installation package for the application, and the application is installed on the second application terminal according to the installation package for the application.

Or, if the application installation information includes a download address, the second application terminal receives an acquisition response message, which is sent by the account server and carries the application installation information, and sends a download request message to the application server, with the download request message carrying the download address and the terminal type of the second application terminal; the application server receives the download request message, acquires an installation package for the application according to the download address and the terminal type of the second application terminal that are carried by the download request message, and sends the installation package for the application to the second application terminal; the second application terminal receives the installation package for the application, and the application is installed on the second application terminal according to the installation package for the application.

In some embodiments, acquiring the installation package for the application according to the application identifier and the terminal type of the second application terminal that are carried by the download request message by the application server may specifically consist in the following content.

The application server determines the application format supported by the second application terminal according to the terminal type of the second application terminal; according to the application identifier and the application format supported by the second application terminal, acquires a corresponding download address from the stored correspondence among application identifiers, application formats and download addresses; and acquires the installation package for the application according to the download address.

In some embodiments, the application server stores the correspondence between terminal types and application formats beforehand, so that according to the terminal type of the second application terminal, the application server acquires the corresponding application format from the stored correspondence between terminal types and application formats, with the acquired application format being the application format supported by the second application terminal.

In some embodiments, acquiring the installation package for the application according to the download address and the terminal type of the second application terminal, that are carried by the download request message, by the application server may specifically consist in the following content.

The application server determines the application format supported by the second application terminal according to the terminal type of the second application terminal; and according to the download address, acquires an application identifier and an application format of the corresponding application from the stored correspondence among application identifiers, application formats and download addresses; if the application format is identical with that supported by the second application terminal, the application server acquires the installation package for the application according to the download address; if the application format is different from that supported by the second application terminal, the application server acquires a corresponding download address from the stored correspondence among application identifiers, application formats and download addresses, according to the application identifier and the application format supported by the second application terminal, and acquires the installation package for the application according to the acquired download address.

Furthermore, if it is determined that the application has been installed on the second application terminal, the second application terminal will discard the application installation information of the application and end the operation.

For example, the second application terminal receives the acquisition response message, which is sent by the account server and carries the application installation information including the application identifier IDA, the APK format, the download address IPA corresponding to the APK format, the iOS format and the download address IPB corresponding to the iOS format, determines that MicroBlog has not been installed on itself according to the application identifier IDA, acquires that it is an Android terminal, determines that the application format supported by itself is the APK format, selects the download address IPA corresponding to the APK format supported by itself, and downloads an installation package for MicroBlog according to the download address IPA, and then MicroBlog is installed on the second application terminal according to the installation package for MicroBlog.

Furthermore, after the application has been installed on the second application terminal successfully, if the user has no other terminal that needs to be installed this application thereon, the user may submit a deletion command to the second application terminal.

Accordingly, the second application terminal receives the deletion command, and sends a deletion request message to the account server, with the deletion request message carrying the user account of the user.

The account server receives the deletion request message, and deletes the application installation information corresponding to the user account carried by the deletion request message from the stored correspondence between user accounts and application installation information.

In these embodiments of the present disclosure, when installing the application, the first application terminal acquires the application installation information of the application, and sends the user account of the user and the application installation information to the account server; according to the user account of the user, the second application terminal acquires the application installation information of the corresponding application from the account server, and then the corresponding application is installed on the second application terminal according to the acquired application installation information. Thus, the second application terminal automatically acquires the application installation information of the application and the application is automatically installed on the second application terminal, enhancing convenience in installing the application.

### Embodiment 3

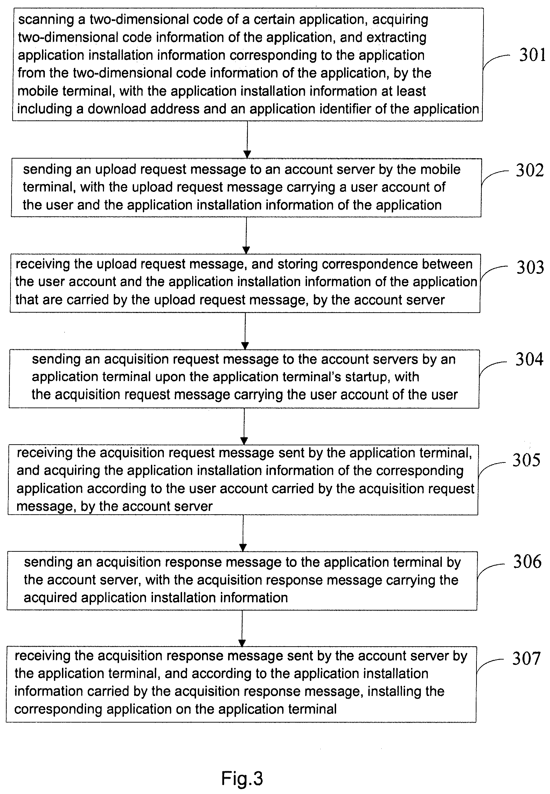

These embodiments of the present disclosure provide a method for installing an application. When a user acquires a two-dimensional code of an application, the user may scan the two-dimensional code of the application using a scanning device configured on a mobile terminal, and then install the application according to the method of the present embodiments. Referring to Fig. 3, the method comprises the following steps.

Step 301: the mobile terminal scans a two-dimensional code of a certain application, acquires two-dimensional code information of the application, and extracts application installation information corresponding to the application from the two-dimensional code information of the application, with the application installation information at least including a download address and an application identifier of the application.

In some embodiments, the user may acquire the two-dimensional code of the application from an advertisement for the application published in the media, such as a magazine or newspaper, scan the two-dimensional code of the application by using the mobile terminal, convert the scanned two-dimensional code into a character string which represents the two-dimensional code information of the application at least including the application installation information of the application.

In some embodiments, the mobile terminal comprises a scanning device thereon, which may be activated by the mobile terminal to scan the two-dimensional code of the application. The scanning device may comprise a camera or be dedicated to scanning two-dimensional codes, etc.

In some embodiments, the application may be of one or more formats, wherein the application being of only one format may be installed on all types of terminals, and application installation information of the application includes an application identifier of the application and a download address corresponding to the application, and thus, the mobile terminal extracts, from the two-dimensional code information of the application, the application installation information of the application, which includes the application identifier of the application and a download address corresponding to the application.

In the case of an application being of more than one format, only the application in a format supported by a terminal may be installed on the terminal, and accordingly, the mobile terminal extracts, from the two-dimensional code information of the application, the application installation information of the application, which includes the application identifier of the application and each format of the application as well as a download address corresponding to each format.

For example, it is assumed that the user uses a mobile terminal to scan a two-dimensional code of an application B to obtain two-dimensional code information of the application B. The mobile terminal extracts application installation information of the application B from the two-dimensional code information of the application B, and the application installation information of the application B includes an application identifier IDB of the application B, a format 1 of the application B, a download address IPB1 corresponding to the format 1, a format 2, and a download address IPB2 corresponding to the format 2.

Furthermore, the application may also be installed on the mobile terminal according to the application installation information of the application.

Specifically, according to the application identifier included in the application installation information of the application, the mobile terminal determines whether the application corresponding to the application identifier has been installed on itself. If the application has not been installed and the application installation information includes a download address corresponding to the application, the mobile terminal downloads an installation package for the application according to the download address, and the application is installed on the mobile terminal according to the installation package for the application; if the application has not been installed and the application installation information includes a plurality of formats corresponding to the application as well as a download address corresponding to each format, the mobile terminal selects a download address corresponding to a format supported by itself and downloads an installation package for the application according to the selected download address, and the application is installed on the the mobile terminal according to the installation package for the application.

Step 302: an upload request message is sent to an account server by the mobile terminal, and carries a user account of the user and the application installation information of the application.

In some embodiments, the user inputs the user account into the mobile terminal beforehand and the mobile terminal receives and stores the user account.

For example, the user inputs a user account UserID2 into the mobile terminal beforehand, and the mobile terminal receives and stores the user account UserID2; accordingly, the mobile terminal acquires the user account UserID2 stored thereon, and sends an upload request message which carries the user account UserID2 and the application installation information of the application B, which includes the application identifier IDB of the application B, the format 1 of the application B, the download address IPB1 corresponding to the format 1, the format 2, and the download address IPB2 corresponding to the format 2.

Step 303: the account server receives the upload request message, and stores correspondence between the user account and the application installation information of the application that are carried by the upload request message.

For example, the account server receives the upload request message, which is sent by the mobile terminal and carries the user account UserID2 and the application installation information of the application B including the application identifier IDB of the application B, the format 1 of the application B, the download address IPB1 corresponding to the format 1, the format 2 and the download address IPB2 corresponding to the format 2, and the account server stores correspondence between the user account UserID2 and the application installation information of the application B, which may be stored in the correspondence between user accounts and application installation information as shown in Table 2.

**Table 2**

| User Account | Application Installation Information |
|---|---|
| UserID2 | IDB |
| | Format 1, IPB1 |
| | Format 2, IPB2 |
| ...... | ...... |

Step 304: an acquisition request message is sent to the account servers by an application terminal upon the application terminal's startup and carries the user account of the user.

In some embodiments, the user inputs the user account into the application terminal beforehand and the application terminal receives and stores the user account. Both the mobile terminal and the application terminal are owned by the user, and the user account stored on the mobile terminal is the same as that stored on the application terminal. In some embodiments, the application terminal may be a mobile terminal or a non-mobile terminal.

For example, the application terminal stores the user account UserID2 beforehand, and upon startup, the application terminal sends an acquisition request message, carrying the user account UserID2, to the account server.

Step 305: the account server receives the acquisition request message sent by the application terminal, and acquires the application installation information of the corresponding application according to the user account carried by the acquisition request message.

Specifically, the account server receives the acquisition request message sent by the application terminal, and according to the user account carried by the acquisition request message, acquires the corresponding application installation information from the stored correspondence between user accounts and application installation information.

For example, the account server receives the acquisition request message, which is sent by the application terminal and carries the user account UserID2, and according to the user account UserID2 carried by the acquisition request message, the account server acquires the corresponding application installation information from the correspondence between user accounts and application installation information as shown in Table 2, wherein the acquired application installation information includes the application identifier IDB, the format 1, the download address IPB1 corresponding to the format 1, the format 2, and the download address IPB2 corresponding to the format 2.

Step 306: an acquisition response message is sent to the application terminal by the account server and carries the acquired application installation information.

For example, the account server sends an acquisition response message to the application terminal, wherein the acquisition response message carries the acquired application installation information including the application identifier IDB, the format 1, the download address IPB1 corresponding to the format 1, the format 2, and the download address IPB2 corresponding to the format 2.

Step 307: the acquisition response message sent by the account server is received by the application terminal, and the corresponding application is installed on the application terminal according to the application installation information carried by the acquisition response message.

Specifically, if the application installation information includes at least an application identifier and a download address, the application terminal receives the acquisition response message, which is sent by the account server and carries the application installation information, and according to the application identifier included in the application installation information, the application terminal determines whether the application corresponding to the application identifier has been installed on itself. If the application has not been installed and the application installation information includes a download address corresponding to the application, the application terminal downloads an installation package for the application according to the download address, and then the application is installed on the second application terminal according to the installation package for the application; if the application has not been installed and the application installation information includes a plurality of formats of the application as well as a download address corresponding to each format, the application terminal selects a download address corresponding to a format supported by itself and downloads an installation package for the application according to the selected download address, and then the application is installed on the application terminal according to the installation package for the application.

Or, if the application installation information includes an application identifier of the application, the application terminal sends a download request message to an application server, with the download request message carrying the application identifier and the terminal type of the application terminal; the application server receives the download request message, acquires an installation package for the application according to the application identifier and the terminal type of the application terminal that are carried by the download request message, and sends the installation package for the application to the application terminal; the application terminal receives the installation package for the application, and the application is installed on the application terminal according to the installation package for the application.

If the application installation information includes a download address, the application terminal sends a download request message to the application server, with the download request message carrying the download address and the terminal type of the second application terminal; the application server receives the download request message, acquires an installation package for the application according to the download address and the terminal type of the application terminal that are carried by the download request message, and sends the installation package for the application to the application terminal; the application terminal receives the installation package for the application, and the application is installed on the application terminal according to the installation package for the application.

In some embodiments, acquiring the installation package for the application according to the application identifier and the terminal type of the application terminal that are carried by the download request message by the application server may specifically consist in the following content.
the application server determines the application format supported by the application terminal according to the terminal type of the application terminal; according to the application identifier and the application format supported by the application terminal, acquires a corresponding download address from the stored correspondence among application identifiers, application formats and download addresses; and acquires the installation package for the application according to the download address.

In some embodiments, acquiring the installation package for the application according to the download address and the terminal type of the application terminal, that are carried by the download request message, by the application server may specifically consist in the following content.

The application server determines the application format supported by the application terminal according to the terminal type of the application terminal; and according to the download address, acquires an application identifier and an application format of the corresponding application from the stored correspondence among application identifiers, application formats and download addresses; if the application format is identical with that supported by the application terminal, the application server acquires the installation package for the application according to the download address; if the application format is different from that supported by the application terminal, the application server acquires a corresponding download address from the stored correspondence among application identifiers, application formats and download addresses, according to the application identifier and the application format supported by the application terminal, and acquires the installation package for the application according to the acquired download address.

Furthermore, if it is determined that the application has been installed on the application terminal, the application terminal will discard the application installation information of the application and end the operation.

For example, the application terminal receives the acquisition response message sent by the account server, wherein the acquisition response message carries the application installation information including the application identifier IDB, the format 1, the download address IPB1 corresponding to the format 1, the format 2, and the download address IPB 2 corresponding to the format 2. According to the application identifier IDB, the application terminal determines that the corresponding application B has not been installed on itself, and given that the application terminal only supports the format 1, the application terminal selects the download address IPB1 corresponding to the format 1 supported by itself from the application installation information including the format 1, the download address IPB1 corresponding to the format 1, the format 2 and the download address IPB2 corresponding to the format 2, and downloads an installation package for the corresponding application B according to the selected download address IPB1, and then the application B is installed on the application terminal according to the installation package for the application B.

Furthermore, after the application has been installed on the application terminal successfully, if the user does not have any other terminal that needs to be installed this application thereon, the user may submit a deletion command to the application terminal.

Accordingly, the application terminal receives the deletion command, and sends a deletion request message to the account server, with the deletion request message carrying the user account of the user.

The account server receives the deletion request message, and deletes the application installation information corresponding to the user account carried by the deletion request message from the stored correspondence between user accounts and application installation information.

In these embodiments of the present disclosure, the mobile terminal scans the two-dimensional code of the application, acquires the application installation information of the application, and sends the user account of the user and the application installation information to the account server; according to the user account of the user, the application terminal acquires the application installation information of the corresponding application from the account server, and then the corresponding application is installed on the application terminal according to the acquired application installation information. Thus, the application terminal automatically acquires the application installation information of the application and the application is automatically installed on the application terminal, enhancing convenience in installing the application.

### Embodiment 4

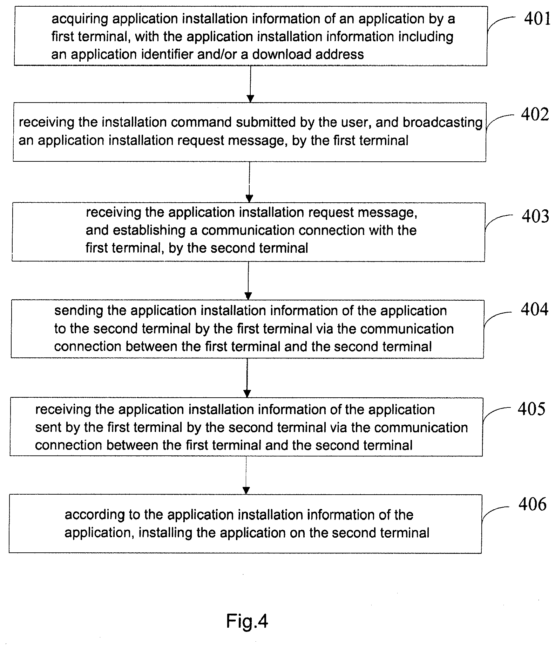

As shown in Fig. 4, the following embodiments of the present disclosure provide a method for installing an application, comprising the following steps.

Step 401: application installation information of an application is acquired by a first terminal and includes an application identifier and/or a download address.

Specifically, the first terminal may acquire the application installation information of the application from a stored installation package for the application; or, the first terminal may scan a two-dimensional code of the application, acquire two-dimensional code information corresponding to the two-dimensional code, and extract the application installation information from the two-dimensional code information.

Furthermore, the application installation information may also include each format of the application and/or each format as well as a download address corresponding to each format.

In some embodiments, when a user needs to install the application on a second terminal, the user may submit an installation command to the first terminal, and the first terminal receives the installation command and then performs the following steps.

Step 402: the installation command submitted by the user is received by the first terminal, and an application installation request message is broadcasted by the first terminal.

In some embodiments, the first terminal may broadcast the application installation request message in a network, which may be a WIFI network, a 3G network, a local area network, etc.

Step 403: the application installation request message is received by the second terminal and a communication connection with the first terminal is established by the second terminal.

Step 404: the application installation information of the application is sent to the second terminal by the first terminal via the communication connection between the first terminal and the second terminal.

Step 405: the application installation information of the application sent by the first terminal is received by the second terminal via the communication connection between the first terminal and the second terminal.

Step 406: the application is installed on the second terminal according to the application installation information of the application.

Specifically, if the application installation information includes at least an application identifier and a download address, according to the application identifier included in the application installation information, the second terminal determines whether the application corresponding to the application identifier has been installed on itself. If the application has not been installed and the application installation information includes a download address corresponding to the application, the second terminal downloads an installation package for the application according to the download address, and then the application is installed on the second terminal according to the installation package for the application; if the application has not been installed and the application installation information includes a plurality of formats of the application as well as a download address corresponding to each format, the second terminal selects a download address corresponding to a format supported by itself and downloads an installation package for the application according to the selected download address, and then the application is installed on the second terminal according to the installation package for the application.

Or, if the application installation information includes an application identifier of the application, the second application terminal sends a download request message to an application server, with the download request message carrying the application identifier and the terminal type of the second application terminal; the application server receives the download request message, acquires an installation package for the application according to the application identifier and the terminal type of the second application terminal that are carried by the download request message, and sends the installation package for the application to the second application terminal; the second application terminal receives the installation package for the application, and the application is installed on the second application terminal according to the installation package for the application.

Or, if the application installation information includes a download address, the second application terminal sends a download request message to the application server, with the download request message carrying the download address and the terminal type of the second application terminal; the application server receives the download request message, acquires an installation package for the application according to the download address and the terminal type of the second application terminal that are carried by the download request message, and sends the installation package for the application to the second application terminal; the second application terminal receives the installation package for the application, and the application is installed on the second application terminal according to the installation package for the application.

In some embodiments, acquiring the installation package for the application according to the application identifier and the terminal type of the second application terminal that are carried by the download request message by the application server may specifically consist in the following content.

The application server determines the application format supported by the second application terminal according to the terminal type of the second application terminal; according to the application identifier and the application format supported by the second application terminal, acquires a corresponding download address from the stored correspondence among application identifiers, application formats and download addresses; and acquires the installation package for the application according to the download address.

In some embodiments, acquiring the installation package for the application according to the download address and the terminal type of the second application terminal, that are carried by the download request message, by the application server may specifically consist in the following content.

The application server determines the application format supported by the second application terminal according to the terminal type of the second application terminal; and according to the download address, acquires an application identifier and an application format of the corresponding application from the stored correspondence among application identifiers, application formats and download addresses; if the application format is identical with that supported by the second application terminal, the application server acquires the installation package for the application according to the download address; if the application format is different from that supported by the second application terminal, the application server acquires a corresponding download address from the stored correspondence among application identifiers, application formats and download addresses, according to the application identifier and the application format supported by the second application terminal, and acquires the installation package for the application according to the acquired download address.

In these embodiments of the present disclosure, the first terminal acquires the application installation information of the application, and sends the application installation information to the account server which then sends it to the second terminal; the corresponding application is installed on the second terminal according to the application installation information. Thus, the second application terminal automatically acquires the application installation information of the application and the application is automatically installed on the second application terminal, enhancing the convenience in installing the application.

### Embodiment 5

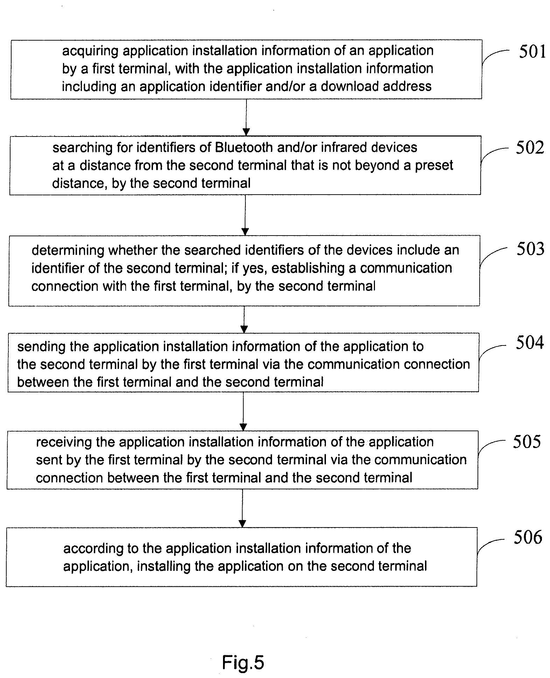

As shown in Fig. 5, these embodiments of the present disclosure provide a method for installing an application, comprising the following steps.

Step 501: application installation information of an application is acquired by a first terminal includes an application identifier and/or a download address.

Specifically, the first terminal may acquire the application installation information of the application from a stored installation package for the application; or the first terminal may scan a two-dimensional code of the application, acquire two-dimensional code information corresponding to the two-dimensional code, and extract the application installation information from the two-dimensional code information.

Furthermore, the application installation information may also include each format of the application and/or each format as well as a download address corresponding to each format.

Step 502: identifiers of Bluetooth and/or infrared devices at a distance from the second terminal that is not beyond a preset distance, are searched for by the second terminal.

Step 503: it is determined by the second terminal whether the searched identifiers of the devices include an identifier of the second terminal; if yes, a communication connection with the first terminal is established by the second terminal.

Step 504: the application installation information of the application is sent to the second terminal by the first terminal via the communication connection between the first terminal and the second terminal.

Step 505: the application installation information of the application sent by the first terminal is received by the second terminal via the communication connection between the first terminal and the second terminal.

Step 506: the application is installed on the second terminal according to the application installation information of the application.

Specifically, if the application installation information includes at least an application identifier and a download address, according to the application identifier included in the application installation information, the second terminal determines whether the application corresponding to the application identifier has been installed on itself. If the application has not been installed and the application installation information includes a download address corresponding to the application, the second terminal downloads an installation package for the application according to the download address, and then the application is installed on the second terminal according to the installation package for the application; if the application has not been installed and the application installation information includes a plurality of formats of the application as well as a download address corresponding to each format, the second terminal selects a download address corresponding to a format supported by itself and downloads an installation package for the application according to the selected download address, and then the application is installed on the second terminal according to the installation package for the application.

Or, if the application installation information includes an application identifier of the application, the second application terminal sends a download request message to an application server, with the download request message carrying the application identifier and the terminal type of the second application terminal; the application server receives the download request message, acquires an installation package for the application according to the application identifier and the terminal type of the second application terminal that are carried by the download request message, and sends the installation package for the application to the second application terminal; the second application terminal receives the installation package for the application, and the application is installed on the second application terminal according to the installation package for the application.

Or, if the application installation information includes a download address, the second application terminal sends a download request message to the application server, with the download request message carrying the download address and the terminal type of the second application terminal; the application server receives the download request message, acquires an installation package for the application according to the download address and the terminal type of the second application terminal that are carried by the download request message, and sends the installation package for the application to the second application terminal; the second application terminal receives the installation package for the application, and the application is installed on the second application terminal according to the installation package for the application.

In some embodiments, acquiring the installation package for the application according to the application identifier and the terminal type of the second application terminal that are carried by the download request message by the application server may specifically consist in the following content.

The application server determines the application format supported by the second application terminal according to the terminal type of the second application terminal; according to the application identifier and the application format supported by the second application terminal, acquires a corresponding download address from the stored correspondence among application identifiers, application formats and download addresses; and acquires the installation package for the application according to the download address.

In some embodiments, acquiring the installation package for the application according to the download address and the terminal type of the second application terminal that are carried by the download request message by the application server may specifically consist in the following content.

The application server determines the application format supported by the second application terminal according to the terminal type of the second application terminal; and according to the download address, acquires an application identifier and an application format of the corresponding application from the stored correspondence among application identifiers, application formats and download addresses,; if the application format is identical with that supported by the second application terminal, the application server acquires the installation package for the application according to the download address; if the application format is different from that supported by the second application terminal, the application server acquires a corresponding download address from the stored correspondence among application identifiers, application formats and download addresses, according to the application identifier and the application format supported by the second application terminal, and acquires the installation package for the application according to the acquired download address.

In these embodiments of the present disclosure, the first terminal acquires the application installation information of the application, and sends the application installation information to the account server which then sends it to the second terminal; the corresponding application is installed on the second terminal according to the application installation information. Thus, the second application terminal automatically acquires the application installation information of the application and the application is automatically installed on the second application terminal, enhancing convenience in installing the application.

### Embodiment 6

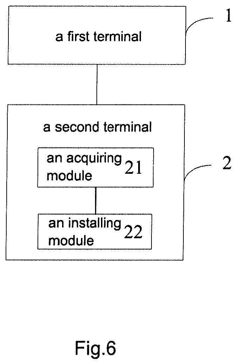

As shown in Fig. 6, these embodiments of the present disclosure provide a system for installing an application, which comprises a first terminal 1 and a second terminal 2 comprising a first acquiring module 21 and an installing module 22.

The first terminal 1 is configured to acquire application installation information.

The first acquiring module 21 is configured to acquire the application installation information from the first terminal.

The installing module 22 is configured to install a corresponding application according to the application installation information.

In some embodiments, the first terminal 1 comprises a second acquiring module or a third acquiring module.

The second acquiring module is configured to acquire the application installation information from an installation package for the application.

The third acquiring module is configured to scan a two-dimensional code of the application, acquire two-dimensional code information corresponding to the two-dimensional code, and extract the application installation information from the two-dimensional code information.

In some embodiments, the first acquiring module 21 comprises a first establishing unit and a first receiving unit.

The first establishing unit is configured to receive an application installation request message broadcast by the first terminal 1 and establish a communication connection with the first terminal 1.

The first receiving unit is configured to receive the application installation information sent by the first terminal 1 via the communication connection.

In some embodiments, the first acquiring module 21 comprises a searching unit, a second establishing unit and a second receiving unit.

The searching unit is configured to search for identifiers of infrared and/or Bluetooth devices at a distance from the searching unit that is not beyond a preset distance.

The second establishing unit is configured to establish a communication connection with the first terminal 1 if the searched identifiers of the devices include the identifier of the first terminal 1.

The second receiving unit is configured to receive the application installation information sent by the first terminal 1 via the communication connection.

Furthermore, the system further comprises an account server.

The first terminal 1 further comprises a first sending module, which is configured to send a user account and the application installation information to the account server.

The first acquiring module 21 is configured to acquire the application installation information from the account server according to the user account.

In some embodiments, the account server comprises a storage module, which is configured to receive the user account and the application installation information and store the user account and the application installation information in correspondence between user accounts and application installation information.

In some embodiments, the first acquiring module 21 comprises a first sending unit and a first receiving unit.

The first sending unit is configured to send an acquisition request message to the account server, with the acquisition request message carrying the user account.

The first receiving unit is configured to receive an acquisition response message sent by the account server, with the acquisition response message carrying the application installation information acquired by the account server.

Furthermore, the account server is further configured to acquire the application installation information from a stored user account and stored application installation information, according to the user account.

Furthermore, the system further comprises an application server,
wherein the installing module 22 is configured to send a download request message to the application server if the application installation information includes an application identifier, with the download request message carrying the application identifier and a terminal type of the second terminal 2, receive an installation package for the application, and install the application according to the installation package for the application;
wherein the application server is configured to acquire the installation package for the application according to the application identifier and the terminal type of the second terminal 2, and send the installation package for the application to the second terminal 2.

In some embodiments, the application server comprises a first determination module, a fourth acquiring module and a second sending module.

The first determination module is configured to determine an application format supported by the second terminal 2 according to the terminal type of the second terminal 2.

The fourth acquiring module is configured to, according to the application identifier and the application format supported by the second terminal 2, acquire a corresponding download address from stored correspondence among application identifiers, application formats and download addresses.

The second sending module is configured to acquire the installation package for the application according to the download address and send the installation package for the application to the second terminal 2.

Furthermore, the system further comprises an application serve,

Wherein the installing module 22 is configured to send a download request message to the application server if the application installation information includes a download address, with the download request message carrying the download address and a terminal type of the second terminal 2, receive an installation package for the application and install the application according to the installation package for the application;
wherein the application server is configured to acquire the installation package for the application according to the download address and the terminal type of the second terminal 2, and send the installation package for the application to the second terminal 2.

In some embodiments, the application server comprises a second determination module, a fifth acquiring module, a third sending module and a sixth acquiring module.

The second determination module is configured to determine an application format supported by the second terminal 2 according to the terminal type of the second terminal 2.

The fifth acquiring module is configured to acquire an application identifier and an application format corresponding to the application from stored correspondence among application identifiers, application formats and download addresses, according to the download address.

The third sending module is configured to acquire the installation package for the application according to the download address if the application format is identical with that supported by the second terminal 2, and send the installation package for the application to the second terminal 2.

The sixth acquiring module is configured to, according to the application identifier and the application format supported by the second terminal 2, acquire a corresponding download address from the stored correspondence among application identifiers, application formats and download addresses if the application format is different from that supported by the second terminal 2, acquire the installation package for the application according to the acquired download address, and send the installation package for the application to the second terminal 2.

In some embodiments, the installing module 22 comprises a determination unit, a first installing unit and a second installing unit.

The determination unit is configured to, according to an application identifier included in the application installation information, determine whether the application corresponding to the application identifier has been installed.

The first installing unit is configured to download an application package for the application according to a download address corresponding to the application if the application has not been installed and the application installation information includes the download address, and install the application according to the installation package for the application.

The second installing unit is configured to select a download address corresponding to the format supported by itself if the application has not been installed and the application installation information includes a plurality of formats corresponding to the application as well as a download address corresponding to each format, download an installation package for the application according to the selected download address, and install the application according to the installation package for the application.

In these embodiments of the present disclosure, the first terminal acquires the application installation information of the application, and the second terminal acquires the application installation information, and the corresponding application is installed on the second terminal according to the acquired application installation information. Thus, the second terminal automatically acquires the application installation information of the application and the application is automatically installed on the second application terminal, enhancing convenience in installing the application.

### Embodiment 7

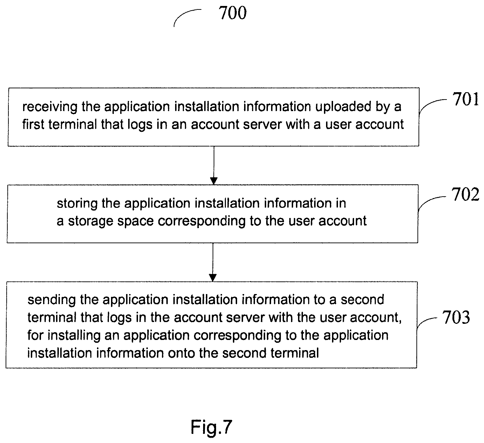

Fig. 7 illustrates a flow chart of a method 700 for transmitting application installation information according to an embodiment of the present disclosure. As shown in Fig. 7, the method 700 for transmitting application installation information may comprise the following steps.
step 701: the application installation information is received, which is uploaded by a first terminal that logs in an account server with a user account.
step 702: the application installation information is stored in a storage space corresponding to the user account.
step 703: the application installation information is sent to a second terminal that logs in the account server with the user account, for installing an application corresponding to the application installation information onto the second terminal.

Nowadays, many users own several terminals. Sometimes, after a user has installed an application on one of those terminals, he/she may wish that this application also be installed on other terminals owned by him/her; or he/she may find an interesting application on one of those terminals and wish to install this application on another terminal through this terminal. According to the abovementioned method 700 for transmitting application installation information as provided in the present disclosure, a desired application may be installed on one terminal based on another terminal by virtue of an account server, thus enhancing convenience in installing an application.

For example, a user has two terminals, one of which is a mobile phone, and the other of which is a PC. After installing an application on the mobile phone, the user wishes that this application can be installed on his/her PC; or having found an application on the mobile phone, the user wishes to install the application on the PC by virtue of the mobile phone. In this situation, the user may log in an account server with a user account via the mobile phone, and upload the application installation information of the application by the mobile phone to the account server, which may store the application installation information in a storage space corresponding to the user account. Thus, after logging in the account server with the same user account, the user's PC may receive the application installation information uploaded by the mobile phone from the account server, thus achieving the installation of the application on the PC by virtue of the mobile phone.

In an embodiment, the user account may be obtained by the user's registration on the account server in advance. For example, the user wishes to synchronize an application installed on his/her mobile phone onto his/her PC, or to install the application onto the PC by using the mobile phone. The user may input his/her registered user account into a login interface for a client application installed on the mobile phone, so that the mobile phone logs in the account server, in order to upload the application installation information to the account server. The client application installed on the mobile phone may be for example QQ software. Next, the user's PC machine starts up and logs in an application, such as Q+ desktop, corresponding to the account server, with the same user account. Q+ desktop is an mirror desktop by which the Q+ system duplicates and improves the native operating system (such as the windows system). Q+ desktop provides more personalized operating experiences that are more convenient while maintaining all icon elements and operating functions of the native operating system, thus making itself a whole new personalized desktop system. By this application, the application installation information uploaded by the user's mobile phone may be received from the account server, and thus, the application corresponding to the application installation information may be installed on the PC. In an embodiment, a physical connection between the user's mobile phone and PC is not required, but instead, it is only needed that they use the same user account to log in the account server, in order for the user to conveniently achieve installing the application on the PC by virtue of the mobile phone.

Those of ordinary skill in the art would be able to understand that the first terminal and the second terminal of the user according to the present disclosure may be terminals of the same or different types. In addition, the user may have more than two terminals, and may even synchronize the application onto a terminal that does not belong to him. These terminals log in the account server with the same user account, thus conveniently achieving installing an application on one terminal based on another terminal.

According to an embodiment of the present disclosure, the application installation information may include a download address and/or an application identifier of the application. On the one hand, the amount of data uploaded by the first terminal to the account serer is smaller, so that not only the upload speed can be improved, but also the storage space of the account server can be saved for the sake of utilization by more users. On the other hand, some applications are of more than one formats, each of which has a corresponding installation package, and these installation packages correspond to different types of terminals. For example, in the case of the application QQ, there are installation packages for Android, Symbian, iOS and so on. Thus, if the application installation information uploaded by the first terminal is an installation package, such as a QQ installation package for iOS, the QQ installation package for iOS is not applicable to the second terminal when the second terminal is an Android mobile phone. Therefore, when the uploaded application installation information only comprises a download address and/or an identifier of an application, no matter what type the second terminal is of, there is no such an inapplicable case. The reason is that the second terminal, after receiving the application installation information, may identify the application to be synchronized according to the application installation information and send a request to download the application to an application server, and then the application is install on the second terminal after receiving an installation package applicable to it from the application server. Furthermore, when the request to download the application is sent to the application server, the application server may send the latest version of installation package for the application, so that the second terminal may be installed the latest version of the application thereon.

According to another embodiment of the present disclosure, the application installation information may include an installation package for an application. When an installation package for an application consists of a smaller amount of data, the application installation information uploaded by the first terminal may be the installation package for the application. Thus, upon receiving the installation package from the account server, the second terminal firstly determines whether the installation package is applicable. If the installation package is applicable to the second terminal, the application may be directly installed on the second terminal based on the installation package, improving the efficiency in installing an application. If the installation package is inapplicable to the second terminal, the second terminal may identify from the installation package which application is to be installed. Then, according to the application corresponding to the installation package, the second terminal may send a request to download the application to the application server, and be installed the application thereon after receiving an installation package applicable to itself from the application server. Furthermore, when the request to download the application is sent to the application server, the application server may send the latest version of installation package for the application, in which case the second terminal may be synchronously installed not only the application, but in particular, the latest version of the application thereon.

According to an embodiment of the present disclosure, the application installation information may be acquired by the first terminal from an installation package for the application or from a two-dimensional code of the application. For example, the user may download the installation package for the application onto the first terminal. Thus, the first terminal may acquire the application installation information of the application when installing the application according to the installation package for the application. Or, the user may just have found an application of interest to him/her on the first terminal and wish to install the application on the second terminal. In this situation, the user may use a scanning device included on the first terminal, such as a camera on a mobile phone, to scan a two-dimensional code of the application, so as to acquire application installation information of the application from the two-dimensional code, without having to install the application on the first terminal. In an embodiment, a two-dimensional code records data symbol information by using a certain geometric figure constituted by black and white shapes distributed on a plane in a certain pattern, and in code compiling, it ingeniously utilizes the concept of "0" and "1" bit stream which constitutes the internal logic basis of computers, employs several geometric shapes corresponding to the binary system to represent literal and numeric information, thus achieving automatic processing of information by automatic recognition and read by an image input device or an photoelectric scanning device. The use of a two-dimensional code to transmit information achieves low cost, high reliability and large information capacity, and there has been an increasingly wide use of two-dimensional codes. Thus, as long as the first terminal of the user is equipped with a camera and installed two-dimensional code scanning software thereon, the first terminal may easily acquire a two-dimensional code of an application from the advertisements for the application published on the media, such as magazines, newspapers, etc., then acquire two-dimensional code information by scanning the two-dimensional code, and acquire application installation information by parsing the two-dimensional code information. Therefore, it is very convenient and simple to achieve acquiring the application installation information of the application by using the first terminal to scan the two-dimensional code.

According to an embodiment of the present disclosure, the sending the application installation information to a second terminal that logs in the account server with the user account may further comprise: sending the application installation information to the second terminal, in response to a request to acquire application installation information sent by the second terminal. After the second terminal starts up and logs in the account server with the same user account as that which is used by the first terminal to log in the account server, it may automatically check whether the account server has stored the application installation information uploaded by the first terminal, that is, sending a request to acquire the application installation information to the account server. If the account server succeeds in retrieving the application installation information uploaded by the first terminal in the storage space corresponding to the user account after receiving the request, the account server sends the application installation information to the second terminal. The application installation information is acquired by the second terminal by requesting to the account server, rather than by an active push by the account server, thus reducing the burden of the account server.

According to another embodiment of the present disclosure, the sending the application installation information to a second terminal that logs in the account server with the user account may further comprise: sending the application installation information to the second terminal, after detecting that the second terminal logs in the account server with the user account. When the account server detects that the second terminal logs in with the same user account as that which is used by the first terminal to log in, it may directly send the application installation information uploaded by the first terminal to the second terminal. This active push can enhance the efficiency in application installation, preventing any meaningless request from the second terminal.

According to an embodiment of the present disclosure, the method 700 may further comprise: deleting the application installation information according to a user command from the second terminal, after sending the application installation information to the second terminal. After the second terminal successfully receives the application installation information, if the user has no other terminal that requires the installation of the application, a user command for deleting the application installation information may be sent to the account server. The account server may delete the application installation information stored in the storage space corresponding to the user account in accordance with the command, and release the storage space for other use.

According to another aspect of the present disclosure, an account server for transmitting application installation information is also provided. The account server may comprise a processor and a memory. In an embodiment, the memory stores executable program code, which is operable to: when being executed by the processor, receive the application installation information uploaded by a first terminal that logs in the account server with a user account; store the application installation information in a storage space corresponding to the user account; and send the application installation information to a second terminal that logs in the account server with the user account, for installing an application corresponding to the application installation information onto the second terminal.

According to another aspect of the present disclosure, a non-transitory computer program product comprising executable program code for transmitting application installation information is also provided. The executable program code is operable to: when being executed, receive the application installation information uploaded by a first terminal that logs in an account server with a user account; store the application installation information in a storage space corresponding to the user account; and send the application installation information to a second terminal that logs in the account server with the user account, for installing an application corresponding to the application installation information onto the second terminal.

Those of ordinary skill in the art would be able to understand that the abovementioned executable program code is further operable to, when being executed by the processor, perform all the steps of the method 700 for transmitting application installation information. For the sake of conciseness, no further description of the additional functions of the executable program code will be provided herein. It should be noted that the code may directly enable the processor to perform a specified operation, be compiled to enable the processor to perform a specified operation, and/or be combined with other software, hardware, and/or firmware (such as a library for performing standard functions) to enable the processor to perform a specified operation.

### Embodiment 8

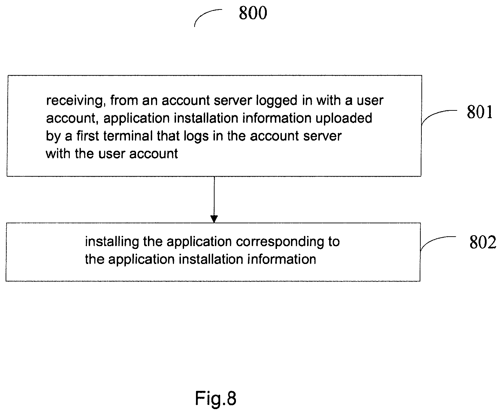

Fig. 8 illustrates a flow chart of a method 800 for installing an application according to an embodiment of the present disclosure. As shown in Fig. 8 the method 800 for installing an application may comprise the following steps.
step 801: application installation information uploaded by a first terminal that logs in a account server with a user account is received from the account server logged in with the user account.
step 802: the application corresponding to the application installation information is installed.

According to an embodiment of the present disclosure, the application installation information may include an identifier of the application and/or a download address of the application.

According to an embodiment of the present disclosure, the installing the application corresponding to the application installation information may further comprise: sending a request to download the application to an application server, according to the application installation information; receiving an installation package for the application from the application server; and installing the application based on the installation package received from the application server.

According to an embodiment of the present disclosure, the application installation information may include an installation package for the application.

According to an embodiment of the present disclosure, the installing the application corresponding to the application installation information may further comprise: determining whether the installation package is applicable; if the installation package is applicable, directly installing the application based on the installation package; and if the installation package is inapplicable, sending a request to download the application to an application server according to the application corresponding to the installation package, receiving an applicable installation package from the application server, and installing the application based on the applicable installation package received from the application server.

According to an embodiment of the present disclosure, the method 800 may further comprise: sending a request to acquire application installation information to the account server, before receiving from the account server the application installation information uploaded by the first terminal that logs in the account server with the user account.

According to an embodiment of the present disclosure, the method 800 may further comprise: sending a user command for deleting the application installation information to the account server, after installing the application corresponding to the application installation information.

The method 800 as illustrated in Fig. 8 is described from the perspective of the second terminal. According to the description of the method for transmitting application installation information as shown in Fig. 7, those of ordinary skill in the art would be able to understand the specific steps of the method for installing an application, and thus, no further detail shall be provided herein.

According to another aspect of the present disclosure, a terminal for installing an application is also provided. The terminal comprises a processor and a memory. In an embodiment, the memory stores executable program code, which is operable to: when being executed by the processor, receive, from an account server logged in with a user account, application installation information uploaded by a first terminal that logs in the account server with the user account; and install the application corresponding to the application installation information.

According to another aspect of the present disclosure, a non-transitory computer program product comprising executable program code for installing an application is also provided. The executable program code is operable to: when being executed, receive, from an account server logged in with a user account, application installation information uploaded by a first terminal that logs in the account server with the user account; and install the application corresponding to the application installation information.

Those of ordinary skill in the art would be able to understand that the abovementioned executable program code may be further operable to, when being executed by the processor, perform all the steps of the method 800 for installing an application. For the sake of conciseness, no further description of the additional functions of the executable program code will be provided herein. It should be noted that the code may directly enable the processor to perform a specified operation, be compiled to enable the processor to perform a specified operation, and/or be combined with other software, hardware, and/or firmware (such as a library for performing standard functions) to enable the processor to perform a specified operation.

### Embodiment 9

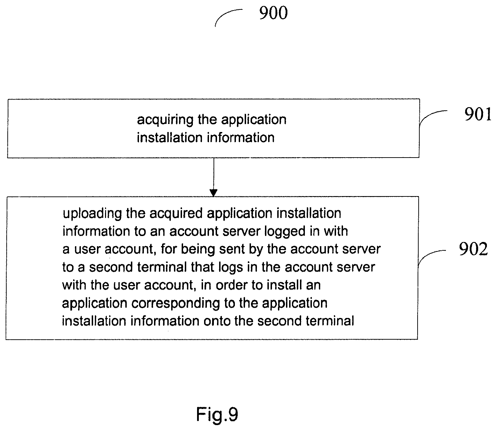

Fig. 9 illustrates a flow chart of a method 900 for uploading application installation information according to an embodiment of the present disclosure. As shown in Fig. 9, the method 900 for uploading application installation information may comprise the following steps.
step 901: the application installation information is acquired.
step 902: the acquired application installation information is uploaded to an account server logged in with a user account, for being sent by the account server to a second terminal that logs in the account server with the user account, in order to install an application corresponding to the application installation information onto the second terminal.

According to an embodiment of the present disclosure, the acquiring the application installation information may further comprise: acquiring the application installation information from an installation package for the application or from a two-dimensional code of the application.

The method 900 as illustrated in Fig. 9 is described from the perspective of the first terminal. According to the description of the method for transmitting application installation information as shown in Fig. 7, those of ordinary skill in the art would be able to understand the specific steps of the method for uploading application installation information, and thus, no further detail shall be provided herein.

According to another aspect of the present disclosure, a terminal for uploading application installation information is also provided. The terminal comprises a processor and a memory. In an embodiment, the memory stores executable program code, which is operable to: when being executed by the processor, acquire application installation information; and upload the acquired application installation information to an account server logged in with a user account, for being sent by the account server to a second terminal that logs in the account server with the user account, in order to install an application corresponding to the application installation information onto the second terminal.

According to another aspect of the present disclosure, a non-transitory computer program product comprising executable program code for uploading application installation information is also provided, wherein the executable program code is operable to: when being executed, acquire the application installation information; and upload the acquired application installation information to an account server logged in with a user account, for being sent by the account server to a second terminal that logs in the account server with the user account, in order to install an application corresponding to the application installation information onto the second terminal.

Those of ordinary skill in the art would be able to understand that the abovementioned executable program code may further be operable to, when being executed by the processor, perform all the steps of the method 900 for uploading application installation information. For the sake of conciseness, no further description of the additional functions of the executable program code will be provided herein. It should be noted that the code may directly enable the processor to perform a specified operation, be compiled to enable the processor to perform a specified operation, and/or be combined with other software, hardware, and/or firmware (such as a library for performing standard functions) to enable the processor to perform a specified operation.

A person skilled in the art would be able to understand that all or part of the steps for implementing the above embodiments may be accomplished by hardware, or by instructing relevant hardware by a program, which may be stored in a computer-readable storage medium, wherein the aforementioned storage medium may be a read-only memory, a magnetic disk, an optical disk, etc.

The above description only relates to some embodiments of the present disclosure, which are not intended to limit the present disclosure.

## Claims

1. A method for installing an application, comprising:
acquiring application installation information (101, 201, 401, 501, 901) by a first terminal (1), the application installation information comprises an application identifier of the application, each format of the application and a download address corresponding to each format;
sending a user account and the application installation information to an account server by the first terminal (1);
receiving the user account and the application installation information and storing the user account and the application installation information in correspondence between user accounts and application installation information, by the account server;
sending an acquisition request message (204, 304) to the account server by the second terminal (2), with the acquisition request message carrying the user account;
acquiring the application installation information from the stored user account and the stored application installation information, according to the user account, by the account server; and
receiving an acquisition response message (207, 307) sent by the account server by the second terminal (2), with the acquisition response message carrying the application installation information acquired by the account server; and
installing a corresponding application (103) according to the application installation information on the second terminal (2).

2. The method according to claim 1, **characterized in that** the acquiring the application installation information by the first terminal (1) comprises:
acquiring the application installation information from an installation package for the application by the first terminal (1); or
scanning a two-dimensional code (301) of the application, acquiring two-dimensional code information corresponding to the two-dimensional code, and extracting the application installation information from the two-dimensional code information by the first terminal (1).

3. The method according to claim 1, **characterized in that** the installing the corresponding application according to the application installation information on the second terminal (2) comprises:
sending a download request message to an application server by the second terminal (2), if the application installation information includes an application identifier, with the download request message carrying the application identifier and a terminal type of the second terminal (2); and
acquiring an installation package for the application according to the application identifier and the terminal type of the second terminal (2) and sending the installation package for the application to the second terminal (2), by the application server; and
receiving the installation package for the application by the second terminal (2) and installing the application according to the installation package for the application on the second terminal (2).

4. The method according to claim 3, **characterized in that** the acquiring the installation package for the application according to the application identifier and the terminal type of the second terminal (2) and the sending the installation package for the application to the second terminal (2) by the application server comprises:
determining an application format supported by the second terminal (2) according to the terminal type of the second terminal (2) by the application server;
according to the application identifier and the application format supported by the second terminal (2), acquiring a corresponding download address by the application server from stored correspondence among application identifiers, application formats and download addresses; and
acquiring the installation package for the application according to the download address and sending the installation package for the application to the second terminal (2) by the application server.

5. The method according to claim 1, **characterized in that** the installing the corresponding application according to the application installation information on the second terminal (2) comprises:
sending a download request message to an application server by the second terminal (2), if the application installation information includes a download address, with the download request message carrying the download address and a terminal type of the second terminal (2);
acquiring an installation package for the application according to the download address and the terminal type of the second terminal (2) and sending the installation package for the application to the second terminal (2), by the application server; and
receiving the installation package for the application by the second terminal (2) and installing the application according to the installation package for the application on the second terminal (2).

6. The method according to claim 5, **characterized in that** the acquiring the installation package for the application according to the download address and the terminal type of the second terminal (2) and the sending the installation package for the application to the second terminal (2) by the application server comprises:
determining an application format supported by the second terminal (2) according to the terminal type of the second terminal (2) by the application server;
according to the download address, acquiring an application identifier and an application format corresponding to the application by the application server from stored correspondence among application identifiers, application formats and download addresses;
acquiring the installation package for the application according to the download address if the application format is identical with that supported by the second terminal (2) and sending the installation package for the application to the second terminal by the application server,;
according to the application identifier and the application format supported by the second terminal (2), acquiring a corresponding download address from the stored correspondence among application identifiers, application formats and download addresses if the application format is different from that supported by the second terminal (2), acquiring the installation package for the application according to the acquired download address, and sending the installation package for the application to the second terminal (2), by the application server,.

7. The method according to claim 1, **characterized in that** the installing the corresponding application according to the application installation information on the second terminal (2) comprises:
according to an application identifier included in the application installation information, determining whether the application corresponding to the application identifier has been installed on the second terminal (2);
if the application has not been installed and the application installation information includes a download address corresponding to the application, downloading an installation package for the application according to the download address by the second terminal (2) and installing the application according to the installation package for the application on the second terminal (2);
if the application has not been installed and the application installation information includes a plurality of formats of the application as well as a download address corresponding to each format, selecting a download address corresponding to the format supported by the second terminal (2), downloading an installation package for the application according to the selected download address, by the second terminal (2), and installing the application according to the installation package for the application on the second terminal (2).

8. A system for installing an application, comprising: a first terminal (1) and a second terminal (2) which comprises a first acquiring module (21) and an installing module (22);
the first terminal (1), configured to acquire application installation information, the application installation information comprises an application identifier of the application, each format of the application and a download address corresponding to each format;
the first acquiring module (21), configured to acquire the application installation information from the first terminal (1); and
the installing module (22), configured to install a corresponding application according to the application installation information;
the system further comprises an account server, wherein the account server comprises:
a storage module, configured to receive the user account and the application installation information and store the user account and the application installation information in correspondence between user accounts and application installation information; and
the first terminal (1) further comprises:
a first sending module, configured to send a user account and the application installation information to the account server;
the first acquiring module (21), configured to acquire the application installation information from the account server according to the user account;
wherein the first acquiring module comprises:
a first sending unit, configured to send an acquisition request message to the account server, with the acquisition request message carrying the user account; and
a first receiving unit, configured to receive an acquisition response message sent by the account server, with the acquisition response message carrying the application installation information acquired by the account server;
wherein the account server is further configured to acquire the application installation information from the stored user account and the stored application installation information, according to the user account.

9. The system according to claim 8, **characterized in that** the first terminal (1) comprises:
a second acquiring module (21), configured to acquire the application installation information from an installation package for the application; or,
a third acquiring module (21), configured to scan a two-dimensional code of the application, acquire two-dimensional code information corresponding to the two-dimensional code, and extract the application installation information from the two-dimensional code information.

## Patentansprüche

1. Verfahren zum Installieren einer Anwendung mit:
Erfassen von Anwendungsinstallationsinformationen (101, 201, 401, 501, 901) durch ein erstes Endgerät (1), wobei die Anwendungsinstallationsinformationen eine Anwendungskennung der Anwendung, jedes Format der Anwendung und eine Download-Adresse entsprechend jedem Format aufweisen;
Senden eines Anwenderkontos und der Anwendungsinstallationsinformationen an einen Kontoserver durch das erste Endgerät (1);
Empfangen des Anwenderkontos und der Anwendungsinstallationsinformationen und Speichern des Anwenderkontos und der Anwendungsinstallationsinformationen in Entsprechung zwischen Anwenderkonten und Anwendungsinstallationsinformationen durch den Kontoserver;
Senden einer Erfassungsanfragenachricht (204, 304) an den Kontoserver durch das zweite Endgerät (2), wobei die Erfassungsanfragenachricht das Anwenderkonto überträgt;
Erfassen der Anwendungsinstallationsinformationen von dem gespeicherten Anwenderkonto und den gespeicherten Anwendungsinstallationsinformationen gemäß dem Anwenderkonto durch den Kontoserver; und
Empfangen einer Erfassungsantwort-nachricht (207, 307), die durch den Kontoserver gesendet wurde, durch das zweite Endgerät (2), wobei die Erfassungsantwort-nachricht die Anwendungsinstallationsinformationen, die durch den Kontoserver erfasst wurden, überträgt; und
Installieren einer entsprechenden Anwendung (103) entsprechend den Anwendungsinstallationsinformationen auf dem zweiten Endgerät (2).

2. Verfahren gemäß Anspruch 1, **dadurch gekennzeichnet, dass** das Erfassen der Anwendungsinstallationsinformationen durch das erste Endgerät (1) aufweist:
Erfassen der Anwendungsinstallationsinformationen von einem Installationspaket für die Anwendung durch das erste Endgerät (1); oder
Abtasten eines zweidimensionalen Codes (301) der Anwendung, Erfassen zweidimensionaler Codeinformationen entsprechend dem zweidimensionalen Code und Extrahieren der Anwendungsinstallationsinformationen von den zweidimensionalen Codeinformationen durch das erste Endgerät (1).

3. Verfahren gemäß Anspruch 1, **dadurch gekennzeichnet, dass** das Installieren der entsprechenden Anwendung gemäß den Anwendungsinstallationsinformationen auf dem zweiten Endgerät (2) aufweist:
Senden einer Download-Anforderungsnachricht an einen Anwendungsserver (2), wenn die Anwendungsinstallationsinformationen eine Anwendungskennung enthalten, wobei die Download-Anforderungsnachricht die Anwendungskennung und einen Endgerätetyp des zweiten Endgeräts (2) trägt; und
Erfassen eines Installationspakets für die Anwendung gemäß der Anwendungskennung und des Endgerätetyps des zweiten Endgeräts (2) und Senden des Installationspakets für die Anwendung an das zweite Endgerät (2) durch den Anwendungsserver; und
Empfangen des Installationspakets für die Anwendung durch das zweite Endgerät (2) und Installieren der Anwendung gemäß dem Installationspaket für die Anwendung auf dem zweiten Endgerät (2).

4. Verfahren gemäß Anspruch 3, **dadurch gekennzeichnet, dass** das Erfassen des Installationspakets für die Anwendung gemäß der Anwendungskennung und des Endgerätetyps des zweiten Endgeräts (2) und das Senden des Installationspakets für die Anwendung an das zweite Endgerät (2) durch den Anwendungsserver aufweist:
Bestimmen eines Anwendungsformats, das durch das zweite Endgerät (2) unterstützt wird, gemäß dem Endgerätetyp des zweiten Endgeräts (2) durch den Anwendungsserver;
gemäß der Anwendungskennung und dem Anwendungsformat, das durch das zweite Endgerät (2) unterstützt wird, Erfassen einer entsprechenden Download-Adresse durch den Anwendungsserver von einer gespeicherten Übereinstimmung unter Anwendungskennungen, Anwendungsformaten und Download-Adressen; und
Erfassen des Installationspaket für die Anwendung gemäß der Download-Adresse und Senden des Installationspakets für die Anwendung an das zweite Endgerät (2) durch den Anwendungsserver.

5. Verfahren gemäß Anspruch 1, **dadurch gekennzeichnet, dass** das Installieren der entsprechenden Anwendung gemäß der Anwendungsinstallationsinformationen auf dem zweiten Endgerät (2) aufweist:
Senden einer Download-Anfragenachricht an einen Anwendungsserver durch das zweite Endgerät (2), wenn die Anwendungsinstallationsinformationen eine Download-Adresse aufweisen, wobei die Download-Anforderungsnachricht die Download-Adresse und einen Endgerätetyp des zweiten Endgeräts (2) trägt;
Erfassen eines Installationspakets für die Anwendung gemäß der Download-Adresse und des Endgerätetyps des zweiten Endgeräts (2) und Senden des Installationspakets für die Anwendung an das zweite Endgerät (2) durch den Anwendungsserver; und
Empfangen des Installationspakets für die Anwendung durch das zweite Endgerät (2) und Installieren der Anwendung gemäß dem Installationspaket für die Anwendung auf dem zweiten Endgerät (2).

6. Verfahren gemäß Anspruch 5, **dadurch gekennzeichnet, dass** das Erfassen des Installationspakets für die Anwendung gemäß der Download-Adresse und dem Endgerätetyp des zweiten Endgeräts (2) und das Senden des Installationspakets für die Anwendung an das zweite Endgerät (2) durch den Anwendungsserver aufweist:
Bestimmen eines Anwendungsformats, das durch das zweite Endgerät (2) unterstützt wird, gemäß dem Endgerätetyp des zweiten Endgeräts (2) durch den Anwendungsserver;
gemäß der Download-Adresse, Erfassen einer Anwendungskennung und eines Anwendungsformats entsprechend der Anwendung durch den Anwendungsserver von einer gespeicherten Entsprechung unter Anwendungskennungen, Anwendungsformaten und Download-Adressen;
Erfassen des Installationspakets für die Anwendung gemäß der Download-Adresse, wenn das Anwendungsformat identisch mit dem ist, das durch das zweite Endgerät (2) unterstützt wird, und Senden des Installationspakets für die Anwendung an das zweite Endgerät durch den Anwendungsserver;
gemäß der Anwendungskennung und dem Anwendungsformat, das durch das zweite Endgerät (2) unterstützt wird, Erfassen einer entsprechenden Download-Adresse von der gespeicherten Übereinstimmung unter Anwendungskennungen, Anwendungsformaten und Download-Adressen, wenn das Anwendungsformat unterschiedlich ist zu dem, das durch das zweite Endgerät (2) unterstützt wird, Erfassen des Installationspakets für die Anwendung gemäß der erfassten Download-Adresse und Senden des Installationspakets für die Anwendung an das zweite Endgerät (2) durch den Anwendungsserver.

7. Verfahren gemäß Anspruch 1, **dadurch gekennzeichnet, dass** das Installieren der zugehörigen Anwendung gemäß den Anwendungsinstallationsinformationen auf dem zweiten Endgerät (2) aufweist:
gemäß einer Anwendungskennung, die in den Anwendungsinstallationsinformationen enthalten ist, Bestimmen, ob die Anwendung entsprechend der Anwendungskennung auf dem zweiten Endgerät (2) installiert worden ist;
wenn die Anwendung nicht installiert worden ist und die Anwendungsinstallationsinformationen eine Download-Adresse entsprechend der Anwendung aufweisen, Downloaden eines Installationspakets für die Anwendung gemäß der Download-Adresse durch das zweite Endgerät (2) und Installieren der Anwendung gemäß dem Installationspaket für die Anwendung auf dem zweiten Endgerät (2);
wenn die Anwendung nicht installiert worden ist und die Anwendungsinstallationsinformationen aufweisen eine Vielzahl von Formaten der Anwendung sowie einer Download-Adresse entsprechend jedem Format, Auswählen einer Download-Adresse entsprechend dem Format, das durch das zweite Endgerät (2) unterstützt wird, Downloaden eines Installationspakets für die Anwendung gemäß der ausgewählten Download-Adresse durch das zweite Endgerät (2) und Installieren der Anwendung gemäß dem Installationspaket für die Anwendung auf dem zweiten Endgerät (2).

8. System zum Installieren einer Anwendung mit: einem ersten Endgerät (1) und einem zweiten Endgerät (2), das ein erstes Erfassungsmodul (21) und ein Installationsmodul (22) aufweist;
wobei das erste Endgerät (1) konfiguriert ist, Anwendungsinstallationsinformationen zu erfassen, wobei die Anwendungsinstallationsinformationen aufweisen eine Anwendungskennung der Anwendung, jedes Format der Anwendung und eine Download-Adresse entsprechend jedem Format;
wobei das erste Erfassungsmodul (21) konfiguriert ist, die Anwendungsinstallationsinformationen von dem ersten Endgerät (1) zu erfassen; und
wobei das Installationsmodul (22) konfiguriert ist, eine entsprechende Anwendung gemäß den Anwendungsinstallationsinformationen zu installieren;
wobei das System weiter einen Kontoserver aufweist, wobei der Kontoserver aufweist:
ein Speichermodul, das konfiguriert ist, das Anwenderkonto und die Anwendungsinstallationsinformationen zu empfangen und das Anwenderkonto und die Anwendungsinstallationsinformationen in Entsprechung zwischen dem Anwenderkonto und Anwendungsinstallationsinformationen zu speichern; und
wobei das erste Endgerät (1) ferner aufweist:
ein erstes Sendemodul, das konfiguriert ist, ein Anwenderkonto und die Anwendungsinstallationsinformationen an den Kontoserver zu senden;
wobei das erste Erfassungsmodul (21) konfiguriert ist, die Anwendungsinstallationsinformationen von dem Kontoserver gemäß dem Anwenderkonto zu erfassen;
wobei das erste Erfassungsmodul aufweist:
eine erste Sendeeinheit, die konfiguriert ist, eine Erfassungsanfragenachricht an den Kontoserver zu senden, wobei die Erfassungsanfragenachricht das Anwenderkonto überträgt; und
eine erste Empfangseinheit, die konfiguriert ist, eine Erfassungsantwort-nachricht, die durch den Kontoserver gesendet wurde, zu empfangen, wobei die Erfassungsantwort-nachricht die Anwendungsinstallationsinformationen, die durch den Kontoserver erfasst wurden, überträgt;
wobei der Kontoserver ferner konfiguriert ist, die Anwendungsinstallationsinformationen von dem gespeicherten Anwenderkonto und den gespeicherten Anwendungsinstallationsinformationen gemäß dem Anwenderkonto zu erfassen.

9. System gemäß Anspruch 8, **dadurch gekennzeichnet, dass** das erste Endgerät (1) aufweist:
ein zweites Erfassungsmodul (21), das konfiguriert ist die Anwendungsinstallationsinformationen von einem Installationspaket für die Anwendung zu erfassen; oder,
ein drittes Erfassungsmodul (21), das konfiguriert ist, einen zweidimensionalen Code der Anwendung abzutasten, zweidimensionale Codeinformationen entsprechend dem zweidimensionalen Code zu erfassen und die Anwendungsinstallationsinformationen aus den zweidimensionalen Codeinformationen zu extrahieren.

## Revendications

1. Procédé pour installer une application, comprenant :
l'acquisition d'une information d'installation d'application (101, 201, 401, 501, 901) par un premier terminal (1), l'information d'installation d'application comprend un identifiant d'application de l'application, chaque format de l'application et une adresse de téléchargement qui correspond à chaque format ;
l'envoi d'un compte d'utilisateur et de l'information d'installation d'application sur un serveur de compte(s) par le premier terminal (1) ;
la réception du compte d'utilisateur et de l'information d'installation d'application et le stockage du compte d'utilisateur et de l'information d'installation d'application selon une correspondance entre les comptes d'utilisateur et les informations d'installation d'application, par le serveur de compte(s) ;
l'envoi d'un message de requête d'acquisition (204, 304) sur le serveur de compte(s) par le second terminal (2), le message de requête d'acquisition étant porteur du compte d'utilisateur ;
l'acquisition de l'information d'installation d'application à partir du compte d'utilisateur stocké et de l'information d'installation d'application stockée, conformément au compte d'utilisateur, par le serveur de compte(s) ; et
la réception d'un message de réponse d'acquisition (207, 307) qui est envoyé par le serveur de compte(s) par le second terminal (2), le message de réponse d'acquisition étant porteur de l'information d'installation d'application qui est acquise par le serveur de compte(s) ; et
l'installation d'une application correspondante (103) conformément à l'information d'installation d'application sur le second terminal (2).

2. Procédé selon la revendication 1, **caractérisé en ce que** l'acquisition de l'information d'installation d'application par le premier terminal (1) comprend :
l'acquisition de l'information d'installation d'application à partir d'un module d'installation pour l'application par le premier terminal (1) ; ou
le balayage d'un code bidimensionnel (301) de l'application, l'acquisition d'une information de code bidimensionnel qui correspond au code bidimensionnel et l'extraction de l'information d'installation d'application à partir de l'information de code bidimensionnel par le premier terminal (1).

3. Procédé selon la revendication 1, **caractérisé en ce que** l'installation de l'application correspondante conformément à l'information d'installation d'application sur le second terminal (2) comprend :
l'envoi d'un message de requête de téléchargement sur un serveur d'application(s) par le second terminal (2), si l'information d'installation d'application inclut un identifiant d'application, le message de requête de téléchargement étant porteur de l'identifiant d'application et d'un type de terminal du second terminal (2) ; et
l'acquisition d'un module d'installation pour l'application conformément à l'identifiant d'application et au type de terminal du second terminal (2) et l'envoi du module d'installation pour l'application sur le second terminal (2), par le serveur d'application(s) ; et
la réception du module d'installation pour l'application par le second terminal (2) et l'installation de l'application conformément au module d'installation pour l'application sur le second terminal (2).

4. Procédé selon la revendication 3, **caractérisé en ce que** l'acquisition du module d'installation pour l'application conformément à l'identifiant d'application et au type de terminal du second terminal (2) et l'envoi du module d'installation pour l'application sur le second terminal (2) par le serveur d'application(s) comprennent :
la détermination d'un format d'application qui est supporté par le second terminal (2) conformément au type de terminal du second terminal (2) par le serveur d'application(s) ;
conformément à l'identifiant d'application et au format d'application qui est supporté par le second terminal (2), l'acquisition d'une adresse de téléchargement correspondante par le serveur d'application(s) à partir d'une correspondance stockée entre les identifiants d'application, les formats d'application et les adresses de téléchargement ; et
l'acquisition du module d'installation pour l'application conformément à l'adresse de téléchargement et l'envoi du module d'installation pour l'application sur le second terminal (2) par le serveur d'application(s).

5. Procédé selon la revendication 1, **caractérisé en ce que** l'installation de l'application correspondante conformément à l'information d'installation d'application sur le second terminal (2) comprend :
l'envoi d'un message de requête de téléchargement sur un serveur d'application(s) par le second terminal (2), si l'information d'installation d'application inclut une adresse de téléchargement, le message de requête de téléchargement étant porteur de l'adresse de téléchargement et d'un type de terminal du second terminal (2) ;
l'acquisition d'un module d'installation pour l'application conformément à l'adresse de téléchargement et au type de terminal du second terminal (2) l'envoi du module d'installation pour l'application sur le second terminal (2), par le serveur d'application(s) ; et
la réception du module d'installation pour l'application par le second terminal (2) et l'installation de l'application conformément au module d'installation pour l'application sur le second terminal (2).

6. Procédé selon la revendication 5, **caractérisé en ce que** l'acquisition du module d'installation pour l'application conformément à l'adresse de téléchargement et au type de terminal du second terminal (2) et l'envoi du module d'installation pour l'application sur le second terminal (2) par le serveur d'application(s) comprennent :
la détermination d'un format d'application qui est supporté par le second terminal (2) conformément au type de terminal du second terminal (2) par le serveur d'application(s) ;
conformément à l'adresse de téléchargement, l'acquisition d'un identifiant d'application et d'un format d'application qui correspondent à l'application par le serveur d'application(s) à partir d'une correspondance stockée entre les identifiants d'application, les formats d'application et les adresses de téléchargement ;
l'acquisition du module d'installation pour l'application conformément à l'adresse de téléchargement si le format d'application est identique à celui qui est supporté par le second terminal (2) et l'envoi du module d'installation pour l'application sur le second terminal par le serveur d'application(s) ; et
conformément à l'identifiant d'application et au format d'application qui est supporté par le second terminal (2), l'acquisition d'une adresse de téléchargement correspondante à partir de la correspondance stockée entre les identifiants d'application, les formats d'application et les adresses de téléchargement si le format d'application est différent de celui qui est supporté par le second terminal (2), l'acquisition du module d'installation pour l'application conformément à l'adresse de téléchargement acquise et l'envoi du module d'installation pour l'application sur le second terminal (2) par le serveur d'application(s).

7. Procédé selon la revendication 1, **caractérisé en ce que** l'installation de l'application correspondante conformément à l'information d'installation d'application sur le second terminal (2) comprend :
conformément à un identifiant d'application qui est inclus dans l'information d'installation d'application, la détermination de si oui ou non l'application qui correspond à l'identifiant d'application a été installée sur le second terminal (2) ;
si l'application n'a pas été installée et que l'information d'installation d'application inclut une adresse de téléchargement qui correspond à l'application, le téléchargement d'un module d'installation pour l'application conformément à l'adresse de téléchargement par le second terminal (2) et l'installation de l'application conformément au module d'installation pour l'application sur le second terminal (2) ; et
si l'application n'a pas été installée et que l'information d'installation d'application inclut une pluralité de formats de l'application ainsi qu'une adresse de téléchargement qui correspond à chaque format, la sélection d'une adresse de téléchargement qui correspond au format qui est supporté par le second terminal (2), le téléchargement d'un module d'installation pour l'application conformément à l'adresse de téléchargement sélectionnée, par le second terminal (2), et l'installation de l'application conformément au module d'installation pour l'application sur le second terminal (2).

8. Système pour installer une application, comprenant : un premier terminal (1) et un second terminal (2) qui comprend un premier module d'acquisition (21) et un module d'installation (22) ;
le premier terminal (1), qui est configuré pour acquérir une information d'installation d'application, l'information d'installation d'application comprend un identifiant d'application de l'application, chaque format de l'application et une adresse de téléchargement qui correspond à chaque format ;
le premier module d'acquisition (21), qui est configuré pour acquérir l'information d'installation d'application à partir du premier terminal (1) ; et
le module d'installation (22), qui est configuré pour installer une application correspondante conformément à l'information d'installation d'application ;
le système comprend en outre un serveur de compte(s), dans lequel le serveur de compte(s) comprend :
un module de stockage, qui est configuré pour recevoir le compte d'utilisateur et l'information d'installation d'application et pour stocker le compte d'utilisateur et l'information d'installation d'application selon une correspondance entre les comptes d'utilisateur et les informations d'installation d'application ; et
le premier terminal (1) comprend en outre :
un premier module d'envoi, qui est configuré pour envoyer un compte d'utilisateur et l'information d'installation d'application sur le serveur de compte(s) ;
le premier module d'acquisition (21), qui est configuré pour acquérir l'information d'installation d'application à partir du serveur de compte(s) conformément au compte d'utilisateur ;
dans lequel le premier module d'acquisition comprend :
une première unité d'envoi, qui est configurée pour envoyer un message de requête d'acquisition sur le serveur de compte(s), le message de requête d'acquisition étant porteur du compte d'utilisateur ; et
une première unité de réception, qui est configurée pour recevoir un message de réponse d'acquisition qui est envoyé par le serveur de compte(s), le message de réponse d'acquisition étant porteur de l'information d'installation d'application qui est acquise par le serveur de compte(s) ;
dans lequel le serveur de compte(s) est en outre configuré pour acquérir l'information d'installation d'application à partir du compte d'utilisateur stocké et de l'information d'installation d'application stockée, conformément au compte d'utilisateur.

9. Système selon la revendication 8, **caractérisé en ce que** le premier terminal (1) comprend :
un deuxième module d'acquisition (21), qui est configuré pour acquérir l'information d'installation d'application à partir d'un module d'installation pour l'application ; ou
un troisième module d'acquisition (21), qui est configuré pour balayer un code bidimensionnel de l'application, pour acquérir une information de code bidimensionnel qui correspond au code bidimensionnel et pour extraire l'information d'installation d'application à partir de l'information de code bidimensionnel.
